# EUROPÄISCHE PATENTSCHRIFT

(11) **EP 2 069 731 B1**
(45) Veröffentlichungstag und Bekanntmachung des Hinweises auf die Patenterteilung: **09.01.2013**
(21) Anmeldenummer: 07787558.1
(22) Anmeldetag: 16.07.2007
(51) Int. Cl.: G01F 23/26

(54) **VORRICHTUNG ZUR BESTIMMUNG UND/ODER ÜBERWACHUNG EINES FÜLLSTANDS**
DEVICE FOR DETERMINING AND/OR MONITORING A FILL LEVEL
DISPOSITIF DE DÉTERMINATION ET/OU DE SURVEILLANCE D'UN NIVEAU DE REMPLISSAGE

(30) Priorität: 13.09.2006 DE 102006043809
(43) Veröffentlichungstag der Anmeldung: 17.06.2009
(73) Patentinhaber: Endress+Hauser GmbH+Co. KG, 79689 Maulburg (DE)
(72) Erfinder: DIETERLE, Roland, 79539 Lörrach (DE); UPPENKAMP, Kaj, 79664 Wehr (DE); WERNET, Armin, 79618 Rheinfelden (DE)
(74) Vertreter: Andres, Angelika Maria
(86) Internationale Anmeldenummer: PCT/EP2007/057290
(87) Internationale Veröffentlichungsnummer: WO 2008/031659

(56) Entgegenhaltungen:
- EP-A- 1 037 067
- WO-A-97/04331
- WO-A-2004/102133

## Beschreibung

Die Erfindung bezieht sich auf eine Vorrichtung zur Bestimmung und/oder Überwachung einer Prozessgröße, wobei es sich bei der Prozessgröße um den Füllstand eines Mediums in einem Behälter handelt, mit mindestens einem Sensorelement, und mit mindestens einer Elektronikeinheit, welche für eine Messung der Prozessgröße das Sensorelement mit mindestens einem elektrischen Anregungssignal beaufschlagt, welche für die Messung der Prozessgröße von dem Sensorelement mindestens ein elektrisches Messsignal empfängt und welche das Messsignal in Hinsicht auf die Prozessgröße auswertet, wobei das Messsignal zumindest abhängig ist vom Anregungssignal und/oder von der Prozessgröße und/oder von einer Änderung der Prozessgröße, und wobei in der Elektronikeinheit mindestens ein Analog-Digitai-Wandfer vorgesehen ist. Bei dem Medium handelt es sich beispielsweise um eine Flüssigkeit, ein Schüttgut, ein Gas oder um ein Fluid.

Bei einer Vielzahl von Messgeräten werden entweder die Anregungssignale oder die Messsignale, aus welchen Aussagen über die Prozessgrößen abgeleitet werden, digitalisiert, um die Signalverarbeitung damit zu vereinfachen und zu verbessern. Für das Beispiel eines kapazitiven Füllstandmessgerätes ist dies beispielsweise beschrieben in der Anmeldung WO 2004/102133.
Bei den zu verarbeitenden Signalen handelt es sich zumeist um elektrische Signale, die entweder Wechselspannungen sind oder welche in Wechselspannungen übertragen werden. Diese Wechselspannungen werden dann durch einen Analog-Digital-Wandler in digitale Signale übertragen. Dabei werden die analogen Signale an Abtastpunkten, welche üblicherweise gleiche zeitliche Abstände aufweisen, abgetastet. Die Auflösung und damit die Genauigkeit, welche das digitale Signal aufweist, hängt dabei von der Anzahl der Abtastpunkte ab. Aufgrund des zur Verfügung stehenden Speichers, der Energie oder der möglichen Abtastrate des Analog-Digital-Wandiers lässt sich ggf. die Auflösung nicht beliebig erhöhen. Um trotz der Rahmenbedingungen die Auflösung zu erhöhen, gibt es das sog. Äquivalenzzeit-Verfahren, Dieses lässt sich insbesondere auf periodische Signale anwenden. Bei dem Verfahren wird ein Signal entweder mehrfach erzeugt oder mehrfach mit einer festen Abtastrate abgetastet. Bei jeder Abtastung werden die Zeitpunkte der Abtastung verschoben bzw. da die Abtastrate fest ist, wird der Zeitpunkt für den ersten Abtastpunkt verschoben. Bei jeder Abtastung wird also die gleiche Anzahl von Punkten abgetastet. Da diese jedoch zwischen den einzelnen Abtastungen zueinander versetzt werden, ergeben sich entsprechend viele Datensätze, die zusammen das gesamte Signal beschreiben, wobei die digitalisierten Daten entsprechend verarbeitet werden müssen. Siehe hierzu die Dokumente DE 4434688 A1, WO 03/019120 A1 oder JP 05041094 A. Dieses Verfahren wird üblicherweise derartig umgesetzt, dass die Abtastung im Analog-Digital-Wandler entsprechend verschoben wird.

Das Dokument WO97/04331A offenbart eine Vorrichtung zur Bestimmung beispielsweise der Sauerstoffkonzentration mittels gepulster Elektronenmagnetresonanz. Der Resonator wird mit einem Anregungssignal in Form von Radiofrequenz-Pulsen beaufschlagt, wobei zwei aufeinander folgende Pulse eine einstellbare Phase zueinander aufweisen. Eine schnelle Messwertaufnahme wird durch eine sehr schnelle Abtast-/Summier-/Miftelwertbildungseinheit erzielt.

In der Offeniegung EP-A-1037067 ist ein Verfahren zur Bildgebung mit einem Magnetresonanzsystern offenbart, wobei die Magnetisierung mittels Hochfrequenzpulsen bei einer Referenzphase erfoldt, Refokusierungpulse bei einer bestimmten Phasenverschiebung erzeugt werden und Daten in Form von Echosignalen aufgenommen und gespeichert werden.

Die Aufgabe besteht darin, ein Messgerät anzugeben, bei welchem die Auflösung der Abtastung in einer alternativen Weise zum Stand der Technik erhöht wird.

Die erfindungsgemäße Lösung der Aufgabe besteht darin, dass die Elektronikeinheit derartig ausgestaltet ist, dass die Elektronikeinheit das Sensorelement für jeweils eine Messung der Prozessgröße zeitlich hintereinander mindestens mit einem ersten Anregungssignal und einem zweiten Anregungssignal derartig beaufschlagt, dass das erste Anregungssignal und das zweite Anregungssignal eine einstellbare Phase zueinander aufweisen. Die Erfindung besteht somit darin, dass im Gegensatz zum Stand der Technik nicht die Abtastung verschoben, sondern dass das zu verarbeitende Signal zeitlich verschoben wird. Durch diese zeitliche Verschiebung ergibt sich die Phase zwischen den Anregungssignalen bzw. damit auch zwischen den jeweils zugehörigen Messsignalen. Die Erfindung ermöglicht somit durch die Phase der Anregungssignale, dass zum einen die Anregungssignale selbst eine höhere Auflösung erfahren können, da die Abtastung dieser Signale eine erhöhte Auflösung des Anregungssignals selbst ergibt. Zum anderen erfahren auch die Messsignale, die zu einer Messung gehören, eine höhere Auflösung, da somit auch das mehrfach erzeugte Messsignal mit dem zeitlichen Versatz, der sich in der Phase äußert, mehrfach digitalisiert wird. Die Anregungssignale werden dabei so oft und in solchem zeitlichen Abstand erzeugt, dass dieser Abstand klein ist gegenüber der Änderungszeit der Prozessgröße, d.h. die zugehörigen Messsignale gehören zum gleichen Wert der Prozessgröße. Weiterhin besteht gleichzeitig eine Messung aus dem wiederholten Beaufschlagen des Sensorelements mit dem gleichen Anregungssignal und dem wiederholten Empfangen des Messsignals. Wesentlich ist dabei, dass das Sensorelement wiederholt mit dem gleichen Anregungssignal beaufschlagt wird, so dass sich auch das Messsignal entsprechend mehrfach ergibt.

Eine Ausgestaltung sieht vor, dass der Analog-Digital-Wandler derartig ausgestaltet ist, dass der Analog-Digital-Wandler das Anregungssignal und/oder das Messsignal an vorgegebenen Abtastpunkten abtastet. Der Analog-Digital-Wandler ist somit derartig ausgestaltet, dass er zu festen Abtastzeitpunkten die Signale abtastet. In den meisten Fällen weisen diese Punkte äquidistante Abstände auf. Erfindungsgemäß ist es dabei nicht erforderlich, die Lage dieser Punkte zu verändern.

Eine Ausgestaltung beinhaltet, dass die Elektronikeinheit derartig ausgestaltet ist, dass die Elektronikeinheit das erste Anregungssignal an den vorgegebenen Abtastpunkten digitalisiert, dass die Elektronikeinheit das zweite Anregungssignal an den vorgegebenen Abtastpunkten digitalisiert, und dass die Elektronikeinheit die digitalisierten Daten des ersten Anregungssignals und die digitalisierten Daten des zweiten Anregungssignals derartig verarbeitet, dass sich eine zusammengesetzte Digitalisierung des Anregungssignals für die Messung ergibt, wobei die digitalisierten Daten des ersten Anregungssignals und die digitalisierten Daten des zweiten Anregungssignals jeweils entsprechend der einstellbaren Phase zueinander verschoben sind. Durch die quasi mehrfache Abtastung des gleichen Signals ergeben sich einzelne Abtastwerte des Signals an sich, welche durch eine passende Sortierung in die entsprechende Reihenfolge gebracht werden müssen oder in der anschließenden Verarbeitung in Hinsicht auf die Prozessgröße entsprechend verarbeitet werden. Handelt es sich beispielsweise um das zweimalige Abtasten eines Anregungssignals durch das zweimalige Beaufschlagen des Sensorelements mit diesem Anregungssignal, so setzt sich das digitalisierte Signal des Anregungssignals an sich jeweils alternierend aus den digitalisierten Daten der ersten und der zweiten Beaufschlagung zusammen.

Eine Ausgestaltung sieht vor, dass die Elektronikeinheit derartig ausgestaltet ist, dass die Elektronikeinheit ein dem ersten A nregungssignal zugehöriges erstes Messsignal an den vorgegebenen Abtastpunkten digitalisiert, dass die Elektronikeinheit ein dem zweiten Anregungssignal zugehöriges zweites Messsignal an den vorgegebenen Abtastpunkten digitalisiert, und dass die Elektronikeinheit die digitalisierten Daten des ersten Messsignals und die digitalisierten Daten des zweiten Messsignals derartig verarbeitet, dass sich eine zusammengesetzte Digitalisierung des Messsignals für die Messung ergibt. In dieser Ausgestaltung wird das Messsignal zweimal abgetastet, indem das Anregungssignal zweimal auf das Sensorelement gegeben wird und jedes Mal das Messsignal gewonnen wird. Diese Ausgestaltung ist entweder alternativ zur vorhergehenden Ausgestaltung oder in Verbindung mit ihr, d.h. entweder wird nur das Anregungssignale oder nur das Messsignal oder es werden Anregungssignale und Messsignal digitalisiert. Die Messsignale sind dabei entsprechend der Phase zwischen den Anregungssignalen ebenfalls zueinander verschoben.

Eine Ausgestaltung beinhaltet, dass das Anregungssignal und/oder das Messsignal periodisch sind/ist. Eine Ausgestaltung sieht vor, dass das erste Anregungssignale und das zweite Anregungssignal im Wesentlichen die gleiche Frequenz und die gleiche Signalform aufweisen. Vorzugsweise wird das gleiche Anregungssignal zweimal als erstes und zweites Anregungssignal auf das Sensorelement gegeben.

Eine Ausgestaltung beinhaltet, dass die einstellbare Phase unterschiedlich zu einem ganzzahligen Vielfachen von 2*π ist. Handelt es sich jeweils insbesondere um periodische Signale, so muss durch die Phase ein Versatz zwischen den Anregungssignalen bzw. den Messsignalen erzeugt werden, was dazu führt, dass die Phase unterschiedlich zu 2*π zu sein hat, um einen Effekt bei der Digitalisierung zu bewirken. Die Phase hängt dabei von der Anzahl der Abtastpunkte und der Anzahl der Beaufschlagung des Sensorelements mit dem gleichen Anregungssignal ab.

Eine Ausgestaltung beinhaltet, dass das Anregungssignal eine elektrische Wechselspannung ist. In einer weiteren Ausgestaltung wird die Prozessgröße Füllstand insbesondere kapazitiv bestimmt. Als Messprinzipien lässt sich jedoch auch die Füllstandsmessung mittels des Laufzeitverfahrens anwenden.

Die Erfindung wird anhand der nachfolgenden Zeichnungen näher erläutert. Es zeigt:
Fig. 1: schematischer Aufbau eines kapazitiven Füllstandsmessgerätes, und
Fig. 2: eine Darstellung der Abtastung von zwei Signalen.

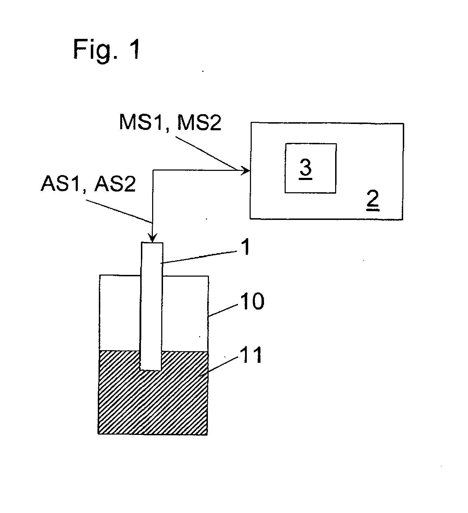

In der Fig. 1 ist als Beispiel ein kapazitives Messgerät dargestellt. Das Sensorelement 1 und die Wandung des Behälters 10 bilden mit dem Medium 11 als Dielektrikum einen Kondensator, dessen Kapazität u.a. vom Füllstand des Mediums 11 abhängt. Somit ist es möglich, aus der Kapazität auf den Füllstand rückzuschließen. Hierfür wird das Sensorelement 1, bei welchem es sich um einen Stab oder um ein Seil handeln kann, mit einer elektrischen Wechselspannung beaufschlagt. Aus dem Strom bzw. aus der daraus beispielsweise über einen Widerstand sich ergebenden Spannung wird dann der Kapazitätswert ermittelt. Für die Beaufschlagung bzw. die Auswertung ist hier die Elektronikeinheit 2 vorgesehen, welche für die Auswertung einen Analog-Digitel-Wandler 3 aufweist. Um die Auflösung erfindungsgemäß zu erhöhen, wird das Sensorelement 1 hier zweimal mit dem Anregungssignal beaufschlag: AS1 und AS2. Zwischen diesen Signalen bzw. zwischen dem Zeitpunkt der Beaufschlagung liegt jeweils eine solche zeitliche Verzögerung, dass sich zwischen den Signalen AS1 und AS2 eine Phase ϕ ergibt, welche unterschiedlich zu einem ganzzahligen Vielfachen von 2 * π ist. Durch den Versatz weisen auch die den Anregungssignalen jeweils zugehörigen Messsignale MS1 und MS2 eine gewisse Phase zueinander auf. Praktisch besteht somit jede Messung aus hier zwei Teilmessungen (eine Erhöhung der Anzahl ist möglich), welche jeweils auf das gleiche Anregungssignal und das gleich Messsignal zurückgehen. D.h. das Anregungssignal wird nicht verändert, es wird nur wiederholt - als unverändert - mit einer passenden Verzögerung auf das Sensorelement 1 gegeben. Geschieht dies entsprechend schnell gegenüber der Änderungszeit der Prozessgröße, so unterscheidet sich auch das jeweilige Messsignal nur hinsichtlich der Phase. (Als Korrektur und Sicherheitsmaßnahme ist ggf. in der Verarbeitung vorgesehen, dass Ausreißer und große Abweichungen erkannt und entsprechend behandelt werden.) Tatsächlich wird somit jeweils eine Messung wiederholt ausgeführt. Werden die Signale anschließend digitalisiert, wobei auch der Analog-Digital-Wandler 3 zwischen den Teilmessungen keine Änderung erfährt, so bewirkt die Phase, dass die Signale an unterschiedlichen Punkten abgetastet werden. Die digitalisierten Daten werden wiederum anschließend passend umsortiert, d.h. hintereinander angeordnet. Im Stand der Technik wird das eigentliche Signal fest gehalten und das Abtastsignal der Digitalisierung wird verschoben. wohingegen in der Erfindung das Abtastsignal fest bleibt und das eigentliche Signal verschoben wird. Die Anzahl der Beaufschlagungen des Sensorelements 1 mit dem Anregungssignal hängt dabei davon ab, wie stark die Auflösung erhöht werden soll. Zwei Anregungssignale führen zu einer Verdoppelung, drei zu einer Verdreifachung usw.. Die Phase hängt dabei auch davon ab, um wie viele Anregungssignale es sich handelt und wie viele Abtastpunkte gegeben sind. Bei einer Auflösungsverdoppelung entspricht beispielsweise die Phase der Hälfte des Abstands zwischen zwei Abtastpunkten.

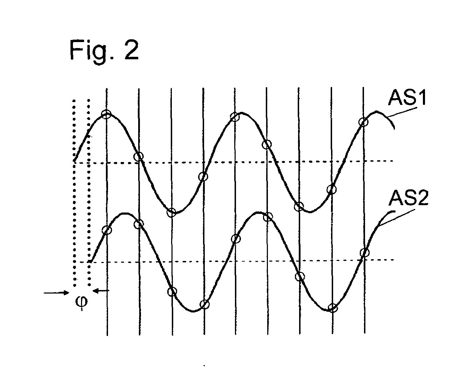

In der Fig. 2 sind die beiden Anregungssignal AS1 und AS2 dargestellt. Die senkrechten Striche zeigen die Abtastpunkte, welche auch durch die Kreise auf den Signalen verdeutlicht werden. Die beiden Anregungssignal AS1 und AS2 werden so ausgesendet, dass zwischen ihnen die Phase ϕ besteht. Wie gut zu erkennen, führt dies dazu, dass die Abtastpunkte sich jeweils auf andere Punkte der Signale beziehen. Werden die Abtastdaten passend sortiert, so ergibt sich eine Auflösungsverdoppelung.

Das erfindungsgemäße Verfahren zur Erhöhung der Auflösung bei der Abtastung von elektrischen Signalen sieht somit wie folgt aus:
Es wird ein Anregungssignal erzeugt, welches als erstes Anregungssignal AS1 auf das Sensorelement 1 gegeben wird. Das dem ersten Anregungssignal AS1 zugehörige erste Messsignal MS1 wird empfangen. In der Ausgestaltung entsprechend zu Fig. 2 werden das erste Anregungssignal AS1 und das erste Messsignal MS1 digitalisiert. Danach wird das gleiche Anregungssignal als zweites Anregungssignal AS2 wieder auf das Sensorelement 1 gegeben und das zugehörige zweite Messsignal MS2 wird empfangen. Dann werden wieder beide Signale AS2 und MS2 digitalisiert. Es sind somit auch entsprechende Speichereinheit vorzusehen oder auszugestalten. Dabei besteht jedoch zwischen der Beaufschlagung des Sensorelements 1 mit den beiden Anregungssignalen AS1 und AS2 eine solche zeitliche Verzögerung, dass die beiden Signale eine Phase ϕ zueinander aufweisen, die unterschiedlich zu einem ganzzahligen Vielfachen von 2*π ist. Durch diese Phase wird das zweite Anregungssignal AS2 an anderen Stellen abgetastet als das erste Anregungssignal AS1, so dass das Anregungssignal als ganzes an doppelt so vielen Stellen abgetastet wird, als es eigentlich der Analog-Digital-Wandler 3 zulässt. Entsprechendes gilt auch für die Abtastung des Messsignals, welches in Gestalt des ersten MS1 und des zweiten Messsignals MS2 eine Abtastung erfährt. Anschließend werden die einzelnen Abtastdaten passend verarbeitet. Im Falle einer kapazitiven Messung handelt es sich bei dem Anregungssignal beispielsweise um eine sinusförmige elektrische Wechselspannung und auch bei dem Messsignal um eine aus einem Stromsignal umgewandelte elektrische Wechselspannung.

## Patentansprüche

1. Vorrichtung zur Bestimmung und/oder Überwachung des Füllstands eines Mediums (11) in einem Behälter (10),
mit mindestens einem Sensorelement (1),
und
mit mindestens einer Elektronikeinheit (2),
welche für eine Messung des Füllstands das Sensorelement (1) mit mindestens einem elektrischen Anregungssignal (AS1, AS2) beaufschlagt, welche für die Messung des Füllstands von dem Sensorelement (1) mindestens ein elektrisches Messsignal (MS1, MS2) empfängt und welche das Messsignal (MS1, MS2) in Hinsicht auf den Füllstand auswertet,
wobei das Messsignal (MS1, MS2) zumindest abhängig ist vom Anregungssignal (AS1, AS2) und/oder vom Füllstand und/oder von einer Änderung des Füllstands
und
wobei in der Elektronikeinheit (2) mindestens ein Analog-Digital-Wandler (3) vorgesehen ist,
**dadurch gekennzeichnet,**
**dass** die Elektronikeinheit (2) derartig ausgestaltet ist,
**dass** die Elekkronikeinheit (2) das Sensorelement (1) für jeweils eine Messung des Füllstands zeitlich hintereinander mindestens mit einem ersten Anregungssignal (AS1) und einem zweiten Anregungssignal (AS2) derartig beaufschlagt, dass das erste Anregungssignal (AS1) und das zweite Anregungssignal (AS2) eine einstellbare Phase (ϕ) zueinander aufweisen.

2. Vorrichtung nach Anspruch 1,
**dadurch gekennzeichnet;**
**dass** der Analog-Digital-Wandler (3) derartig ausgestaltet ist,
**dass** der Analog-Digital-Wandler (3) das Anregungssignal (AS1, AS2) und/oder das Messsignal (MS1, MS2) an vorgegebenen Abtastpunkten abtastet.

3. Vorrichtung nach Anspruch 2,
**dadurch gekennzeichnet,**
**dass** die Elektronikeinheit (2) derartig ausgestaltet ist,
**dass** die Elektronikeinheit (2) das erste Anregungssignal (AS1) an den vorgegebenen Abtastpunkten digitalisiert,
**dass** die Elektronikeinheit (2) das zweite Anregungssignal (AS2) an den vorgegebenen Abtastpunkten digitalisiert,
und **dass** die Elektronikeinheit (2) die digitalisierten Daten des ersten Anregungssignals (AS1) und die digitalisierten Daten des zweiten Anregungssignals (AS2) derartig verarbeitet,
**dass** sich eine zusammengesetzte Digitalisierung des Anregungssignals für die Messung ergibt,
wobei die digitalisierten Daten des ersten Anregungssignals (AS1) und die digitalisierten Daten des zweiten Anregungssignals (AS2) jeweils entsprechend der einstellbaren Phase (ϕ) zueinander verschoben sind.

4. Vorrichtung nach Anspruch 2 oder 3,
**dadurch gekennzeichnet,**
**dass** die Elektronikeinheit (2) derartig ausgestaltet ist,
**dass** die Elektronikeinheit (2) ein dem ersten Anregungssignal (AS1) zugehöriges erstes Messsignal (MS1) an den vorgegebenen Abtastpunkten digitalisiert,
**dass** die Elektronikeinheit (2) ein dem zweiten Anregungssignal (AS2) zugehöriges zweites Messsignal (MS2) an den vorgegebenen Abtastpunkten digitalisiert,
und **dass** die Elektronikeinheit (2) die digitalisierten Daten des ersten Messsignals (MS1) und die digitalisierten Daten des zweiten Messsignals (MS2) derartig verarbeitet,
**dass** sich eine zusammengesetzte Digitalisierung des Messsignals für die Messung ergibt.

5. Vorrichtung nach mindestens einem der Ansprüche 1 bis 4,
**dadurch gekennzeichnet,**
**dass** das Anregungssignal (AS1, AS2) und/oder das Messsignal (MS1, MS2) periodisch sind/ist.

6. Vorrichtung nach mindestens einem der Ansprüche 1 bis 5,
**dadurch gekennzeichnet,**
**dass** das erste Anregungssignal (AS1) und das zweite Anregungssignal (AS2) im Wesentlichen die gleiche Frequenz und die gleiche Signalform aufweisen.

7. Vonichtung nach mindestens einem der Ansprüche 1 bis 6,
**dadurch gekennzeichnet,**
**dass** die einstellbare Phase (ϕ) unterschiedlich zu einem ganzzahligen Vielfachen von 2*π ist.

8. Vorrichtung nach Anspruch 1,
**dadurch gekennzeichnet,**
**dass** das Anregungssignal (AS1, AS2) eine elektrische Wechselspannung ist.

## Claims

1. Unit for determining and/monitoring the level of a medium (11) in a container (10), with at least one sensor element (1),
and
with at least one electronic unit (2),
which, to measure the level, subjects the sensor element (1) to at least one electrical excitation signal (AS1, AS2),
which, to measure the level, receives at least one electrical measurement signal (MS1, MS2) from the sensor element (1)
and which evaluates the measurement signal (MS1, MS2) with a view to determining the level,
wherein the measurement signal (MS1, MS2) depends at least on the excitation signal (AS1, AS2) and/or the level and/or a change in the level
and
wherein at least one analog digital converter (3) is provided in the electronic unit (2),
**characterized in that**
the electronic unit (2) is designed in such a way
that for each measurement of the level the electronic unit (2) subjects the sensor element (1) to at least a first excitation signal (AS1) and a second excitation signal (AS2) one after another in such a way that the first excitation signal (AS1) and the second excitation (AS2) display an adjustable phase (ϕ) in relation to one another.

2. Unit as claimed in Claim 1,
**characterized in that**
the analog digital converter (3) is designed in such a way that the analog digital converter (3) interrogates the excitation signal (AS1, AS2) and/or the measurement signal (MS1, MS2) at predefined interrogation points.

3. Unit as claimed in Claim 2,
**characterized in that**
the electronic unit (2) is designed in such a way that the electronic unit (2) digitizes the first excitation signal (AS1) at the predefined interrogation points,
the electronic unit (2) digitizes the second excitation signal (AS2) at the predefined interrogation points,
and that the electronic unit (2) processes the digitized data of the first excitation signal (AS1) and the digitized data of the second excitation signal (AS2) in such a way that results in a combined digitalization of the excitation signal for the measurement, wherein the digitized data of the first excitation signal (AS1) and the digitized data of second excitation signal (AS2) are dephased in relation to one another in accordance with the adjustable phase (ϕ).

4. Unit as claimed in Claim 2 or 3,
**characterized in that**
the electronic unit (2) is designed in such a way that
the electronic unit (2) digitizes a first measurement signal (MS1) which belongs to the first excitation signal (AS1) at the predefined interrogation points,
the electronic unit (2) digitizes a second measurement signal (MS2) which belongs to the second excitation signal (AS2) at the predefined interrogation points and that the electronic unit (2) processes the digitized data of the first measurement signal (MS1) and the digitized data of the second measurement signal (MS2) in such a way that results in a combined digitalization of the measurement signal for the measurement.

5. Unit as claimed in at least one of the Claims 1 to 4,
**characterized in that**
the excitation signal (AS1, AS2) and/or the measurement signal (MS1, MS2) is/are periodic.

6. Unit as claimed in at least one of the Claims 1 to 5,
**characterized in that**
the first excitation signal (AS1) and the second excitation signal (AS2) essentially have the same frequency and the same signal shape.

7. Unit as claimed in at least one of the Claims 1 to 6,
**characterized in that**
the adjustable phase (ϕ) is different to an integer multiple of 2*π.

8. Unit as claimed in Claim 1,
**characterized in that**
the excitation signal (AS1, AS2) is an electrical alternating voltage.

## Revendications

1. Dispositif destiné à la détermination et/ou à la surveillance du niveau d'un produit (11) dans un réservoir (10),
avec au moins un élément capteur (1),
et
avec au moins une unité électronique (2),
laquelle alimente, pour une mesure du niveau, l'élément capteur (1) avec au moins un signal d'excitation électrique (AS1, AS2),
laquelle reçoit, pour la mesure du niveau, au moins un signal de mesure électrique (MS1, MS2) de l'élément capteur (1)
et laquelle exploite le signal de mesure (MS1, MS2) en vue de la détermination du niveau,
le signal de mesure (MS1, MS2) dépendant au moins du signal d'excitation (AS1, AS2) et/ou du niveau et/ou d'un changement de niveau
et
au moins un convertisseur analogique-numérique (3) étant prévu dans l'unité électronique (2),
**caractérisé en ce**
**que** l'unité électronique (2) est conçue de telle manière
**que** l'unité électronique (2) alimente l'élément capteur (1) pour respectivement une mesure du niveau successive dans le temps avec un premier signal d'excitation (AS1) et un deuxième signal d'excitation (AS2), de telle manière que le premier signal d'excitation (AS1) et le deuxième signal d'excitation (AS2) présentent une phase (ϕ) réglable l'un par rapport à l'autre.

2. Dispositif selon la revendication 1,
**caractérisé en ce**
**que** le convertisseur analogique-numérique (3) est conçu de telle manière que le convertisseur analogique-numérique (3) échantillonne le signal d'excitation (AS1, AS2) et/ou le signal de mesure (MS1, MS2) en des points d'échantillonnage prédéfinis.

3. Dispositif selon la revendication 2,
**caractérisé en ce**
**que** l'unité électronique (2) est conçue de telle manière
**que** l'unité électronique (2) numérise le premier signal d'excitation (AS1) aux points d'échantillonnage prédéfinis,
**que** l'unité électronique (2) numérise le deuxième signal d'excitation (AS2) aux points d'échantillonnage prédéfinis,
et **que** l'unité électronique (2) traite les données numérisées du premier signal d'excitation (AS1) et les données numérisées du deuxième signal d'excitation (AS2) de telle manière
**qu'**il en résulte un numérisation composée du signal d'excitation pour la mesure,
les données numérisées du premier signal d'excitation (AS1) et les données numérisées du deuxième signal d'excitation (AS2) étant respectivement déphasées les unes par rapport aux autres en fonction de la phase (ϕ) réglable.

4. Dispositif selon la revendication 2 ou 3,
**caractérisé en ce**
**que** l'unité électronique (2) est conçue de telle manière
**que** l'unité électronique (2) numérise, aux points d'échantillonnage prédéfinis, un premier signal de mesure (MS1) correspondant au premier signal d'excitation (AS1),
**que** l'unité électronique (2) numérise, aux points d'échantillonnage prédéfinis, un deuxième signal de mesure (MS2) correspondant au deuxième signal d'excitation (AS2), et que l'unité électronique (2) traite les données numérisées du premier signal de mesure (MS1) et les données numérisées du deuxième signal de mesure (MS2) de telle manière qu'il en résulte une numérisation composée du signal de mesure pour la mesure.

5. Dispositif selon au moins l'une des revendications 1 à 4,
**caractérisé en ce**
**que** le signal d'excitation (AS1, AS2) et/ou le signal de mesure (MS1, MS2) est/sont périodique(s).

6. Dispositif selon au moins l'une des revendications 1 à 5,
**caractérisé en ce**
**que** le premier signal d'excitation (AS1) et le deuxième signal d'excitation (AS2) présentent pour l'essentiel la même fréquence et la même forme de signal.

7. Dispositif selon au moins l'une des revendications 1 à 6,
**caractérisé en ce**
**que** la phase (ϕ) réglable est différente d'un multiple entier de 2*π.

8. Dispositif selon la revendication 1,
**caractérisé en ce**
**que** le signal d'excitation (AS1, AS2) est une tension électrique alternative.
